# EUROPEAN PATENT APPLICATION

(11) **EP 4 219 190 A1**
(43) Date of publication of application: **02.08.2023**
(21) Application number: 21872336.9
(22) Date of filing: 16.09.2021
(51) Int. Cl.: B60C 1/00, C08C 19/00, C08G 59/40, C09J 109/10, C09J 163/00, C08G 18/80, B60C 9/00

(54) **ADHESIVE COMPOSITION FOR RUBBER/RESIN BONDING, ORGANIC-FIBER-CORD/RUBBER COMPOSITE, AND TIRE**

(30) Priority: 23.09.2020 JP 2020159004
(71) Applicant: BRIDGESTONE CORPORATION, Chuo-ku Tokyo 104-8340 (JP)
(72) Inventor: NAKAMURA, Masaaki, Tokyo 104-8340 (JP)
(74) Representative: Marks & Clerk LLP
(86) International application number: PCT/JP2021/034198
(87) International publication number: WO 2022/065206

(57) **Abstract**

Provided is an adhesive composition for rubber-resin bonding that has little environmental impact and exhibits good adhesiveness between resin and a coating rubber composition. The adhesive composition for rubber-resin bonding comprises: (A) a synthetic rubber latex having an unsaturated diene; (B) a water-soluble carbodiimide; and (C) a thermally crosslinkable compound.

## Description

### TECHNICAL FIELD

The present invention relates to an adhesive composition for rubber-resin bonding, an organic fiber cord-rubber composite, and a tire.

### BACKGROUND

Conventionally, for the purpose of reinforcing rubber products such as tires, an organic fiber cord such as a tire cord made of nylon fibers, polyester fibers, or the like and a tire rubber composition are adhered to each other to form an organic fiber cord-rubber composite. For the adhesion, a technique of coating the organic fiber cord with an adhesive composition, embedding the coated organic fiber cord in the tire rubber composition, and covulcanizing the coated organic fiber cord with the tire rubber composition is widely used.

In the process of coating the organic fiber cord with the adhesive composition, a solvent is typically used for the purpose of adjusting the viscosity of the adhesive composition. Since the solvent evaporates in this process, water having little environmental impact is preferably used as the solvent. Further, in the case of coating the organic fiber cord with the adhesive composition by immersion, in particular, the viscosity of the adhesive composition must be reduced (by a solvent) so that the adhesive composition can be applied thereto by immersion.

Typically, the components contained in a water-based adhesive composition which is made to be aqueous (i.e., water-soluble or water-dispersible) need to have a polar molecular structure. Meanwhile, a polymeric material such as rubber or an organic fiber cord base material as an adherend has low polarity. When the polarity of the surface of the rubber or organic fiber cord base material and the polarity of the components contained in the adhesive composition differ greatly, the adhesion becomes difficult. Hence, in the case of using the water-based adhesive composition as an adhesive composition for polymeric materials, while the components contained in the water-based adhesive composition need to have polarity to ensure aqueousness of the adhesive composition, the polarity must be well controlled so that adhesiveness should not decrease due to a difference in polarity between the adhesive composition and the adherend. In view of this, a water-based adhesive composition for polymeric materials capable of balancing these competing features is desirable for use.

As such an adhesive composition described above, a resorcin-formaldehyde-latex (RFL) adhesive composition obtained by aging a liquid mixture containing resorcin, formaldehyde, and rubber latex or an adhesive composition obtained by mixing the RFL adhesive composition with a specific adhesion promoter has been conventionally used (see PTL 1 to PTL 4).

As is well known in the rubber industry, an adhesive composition (PTL 1) composed of a water-dispersible rubber latex component and a water-based phenol resin obtained by mixing water-soluble resorcin and formaldehyde and aging the mixture was found to be capable of adhering to both rubber as an adherend and a surface of a base material with low polarity such as an organic fiber cord material as another adherend in a compatible manner, and is commonly used worldwide. In the adhesion by the RFL adhesive composition, the rubber latex component contained in the RFL adhesive composition adheres to the adherend rubber side by covulcanization, while the phenolic resin component composed of the condensation product of formaldehyde and resorcin having adhesiveness to the organic fiber base material adheres to the adherend base material side.

The resorcin has been preferably used in this case because resorcin can serve as a resin component having high adhesiveness to the organic fiber base material side, i.e., as a phenolic condensation resin which is a resin species having high adhesiveness to the adherend base material, in spite of the presence of a polar functional group introduced into the phenol ring thereof to obtain water solubility (the polar functional group thus introduced is a hydroxy group having relatively low polarity and thus not causing so much steric hindrance).

The RFL adhesive composition is obtained by mixing and aging, in the presence of a basic composition, resorcin, formaldehyde, and rubber latex prepared by using rosin acid or the like as an emulsifier in polymerization thereof. It is assumed from those facts that: resorcin and formaldehyde dissolved in water condense in a resol-type condensation reaction (PTL 2) in the presence of a base; and the rosin acid on the latex surface addition-condenses with a methylol group at a terminal end of the resol-type phenolformaldehyde addition condensation product (NPL 1).

In the aging process, the latex crosslinks with the resole-type resorcin-formaldehyde condensation product via the rosin acid, so that the adhesion is strengthened.

As the adhesion promoter to be added to the RFL adhesive composition, an aqueous (water-dispersible or water-soluble) adhesion promoter has been used to improve the adhesion of the water-based adhesive composition to the surface of the base material with low polarity, such as an organic fiber cord material.

As the water-dispersible adhesion promoter, (blocked) isocyanate such as methylene diphenyl diisocyanate having a particle size of 0.01 µm to 0.50 µm (see PTL 3), water-dispersible particles of water-insoluble phenolic novolac-type resin such as cresol novolac-type multifunctional epoxy resin (see PTL 4), etc. are used.

As the adhesion promoter containing a water-soluble group, a sodium hydroxide solution of a novolac-type condensation product obtained by a novolac reaction of resorcin and formaldehyde (see PTL 5), a phenolic resin that dissolves in water in the presence of a basic substance, such as an ammonium solution of a novolac-type condensation product of chlorophenol and formaldehyde, or an aqueous urethane compound having a (thermo-dissociably blocked) isocyanate group and a self-water-soluble group (a group which is water-soluble by itself) (see PTL 6), etc. are used in combination with RFL adhesive compositions.

In recent years, however, there is a demand to reduce the use of resorcin which has been used as a water-soluble component in RFL adhesive compositions, in terms of reducing environmental impact.

To meet this demand, various adhesive compositions that do not contain resorcin but use water as a solvent are studied and proposed.

For example, an adhesive composition containing rubber latex, a blocked isocyanate compound, an epoxide compound, and an amino-based compound as a curing agent (see PTL 7), an adhesive composition containing urethane resin having a (thermo-dissociably blocked) isocyanate group, an epoxide compound, a polymer having an oxazoline group, a basic catalyst having a number-average molecular weight of 1,000 to 75,000, and rubber latex (see PTL 8), etc. are disclosed as resorcin-free adhesive compositions.

### CITATION LIST

### Patent Literature

PTL 1: US 2126229 B (2128229 B)
PTL 2: JP 2005-263887 A
PTL 3: JP 2006-037251 A
PTL 4: JP H09-012997 A
PTL 5: WO 97/013818 A1
PTL 6: JP 2011-241402 A
PTL 7: WO 2010/125992 A1
PTL 8: JP 2013-064037 A

### Non-patent Literature

NPL 1: Koichi Hakata, Network Polymer, Vol. 31, No. 5, p. 252 (2010)

### SUMMARY

### (Technical Problem)

However, the adhesiveness of the foregoing resorcin-free adhesive compositions is lower than that of the conventional RFL adhesive compositions because no crosslinking is obtained between the latex component in the coating rubber composition and the resorcin-formaldehyde condensation product in the adhesive composition, in the former.

The foregoing resorcin-free adhesive compositions also cause a decrease in the cord strength of the organic fiber cord coated with the adhesive composition.

The present disclosure has been contrived in view of the problems described above and an object thereof is to provide an adhesive composition for rubber-resin bonding (in particular, an adhesive composition for an organic fiber cord) that (1) has little impact on the environment and (2) exhibits good adhesiveness between resin (in particular, organic fiber cord) and a coating rubber composition.
Further, another object of the present disclosure is to provide an organic fiber cord-rubber composite using an organic fiber cord coated with the adhesive composition for rubber-resin bonding, and a tire using the organic fiber cord-rubber composite.

### (Solution to Problem)

The inventor of the present disclosure, as a result of a keen study of adhesive compositions for rubber-resin bonding to achieve the objects described above, discovered that an adhesive composition for rubber-resin bonding containing (A) a synthetic rubber latex having an unsaturated diene, (B) a water-soluble carbodiimide, and (C) a thermally crosslinkable compound (1) has little impact on the environment and (2) exhibits good adhesiveness between resin (in particular, organic fiber cord) and a coating rubber composition, thereby successfully achieving the objects. The present disclosure has been completed on the basis of those discoveries.

In short, an adhesive composition for rubber-resin bonding according to the present disclosure is characterized in that is comprises: (A) a synthetic rubber latex having an unsaturated diene; (B) a water-soluble carbodiimide; and (C) a thermally crosslinkable compound.

An organic fiber cord-rubber composite according to the present disclosure is characterized in that it uses an organic fiber cord coated with the adhesive composition for rubber-resin bonding.

A tire according to the present disclosure is characterized in that it uses the organic fiber cord-rubber composite.

### (Advantageous Effect)

According to the present disclosure, it is possible to provide an adhesive composition for rubber-resin bonding (in particular, an adhesive composition for an organic fiber cord) that (1) has little impact on the environment and (2) exhibits good adhesiveness between resin and a coating rubber composition.
Further, it is possible to provide an organic fiber cord-rubber composite using an organic fiber cord coated with the adhesive composition for rubber-resin bonding, and a tire using the organic fiber cord-rubber composite.

### BRIEF DESCRIPTION OF THE DRAWINGS

In the accompanying drawings:

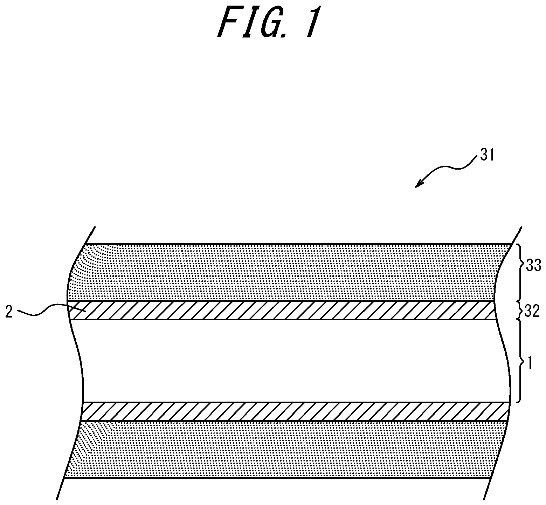

FIG. 1 is a schematic sectional view illustrating an example of an organic fiber cord-rubber composite according to the present disclosure.

### DETAILED DESCRIPTION

An adhesive composition for rubber-resin bonding, an organic fiber cord-rubber composite, and a tire according to the present disclosure will be demonstratively described in detail below, by way of embodiments. The following description is intended to be illustrative, and not restrictive.

In this specification, when a range is expressed, the both ends of the range are also included within the range unless otherwise stated.

### [Adhesive composition for rubber-resin bonding]

An adhesive composition for rubber-resin bonding according to the present disclosure comprises: (A) a synthetic rubber latex having an unsaturated diene; (B) a water-soluble carbodiimide; and (C) a thermally crosslinkable compound. Such an adhesive composition for rubber-resin bonding according to the present disclosure as described above causes superior effects of: (1) having relatively little impact on the environment; and (2) exhibiting good adhesiveness between resin and a coating rubber composition.

In the adhesive composition for rubber-resin bonding according to the present disclosure, (A) the synthetic rubber latex having an unsaturated diene, (B) the water-soluble carbodiimide, and (C) the thermally crosslinkable compound contribute to improved adhesiveness between resin and coating rubber. The adhesive composition for rubber-resin bonding according to the present disclosure can improve the adhesiveness between rubber and resin without containing resorcin, and can also reduce the environmental impact by not containing resorcin.

The adhesive composition for rubber-resin bonding according to the present disclosure preferably does not contain resorcin. Not using resorcin ensures reduction in environmental impact.

### <Resin>

Type of the resin to be bonded to the rubber by using the adhesive composition for rubber-resin bonding according to the present disclosure is not limited, and various resins can be used. Examples of the resin include thermoplastic resins, thermosetting resins, and the like. More specifically, an organic fiber cord is preferable as the resin which is an adherend.

### <<Organic fiber cord>>

The organic fiber cord is used to reinforce the strength of rubber articles such as tires. When using the organic fiber cord as a reinforcing material, a twisted cord obtained by twisting a monofilament/multifilament cord as a spun organic fiber raw yarn may be used as the organic fiber cord. The organic fiber cord is then embedded in and vulcanized with the rubber for coating the organic fiber cord, so that the organic fiber cord adheres to the rubber by the adhesive composition, whereby an organic fiber cord-rubber composite is formed. The organic fiber cord-rubber composite can be used as a reinforcement member of a rubber article such as a tire.

Type of the material of the organic fiber cord is not particularly limited, and examples thereof include i) resin fiber materials typically represented by: aliphatic polyamide fiber cord such as polyester, 6-nylon, 6,6-nylon, and 4,6-nylon; protein fiber cord such as artificial fibroin fiber; polyketone fiber cord; aromatic polyamide fiber cord such as polynonamethylene terephthalamide and paraphenylene terephthalamide; acrylic fiber cord; carbon fiber cord; and cellulose fiber cord such as rayon and lyocell, and ii) fiber materials obtained by mixing any of these materials. Of those examles, polyester, 6-nylon, and 6,6-nylon are preferable, and polyester is particularly preferable.

The material of the polyester is a polymer having an ester bond in the main chain. In more detail, the material of the polyester is a polymer in which 80% or more of the repeating units in the main chain are of an ester bond type. Non-limiting examples of the polyester include products of condensation by an esterification reaction or a transesterification reaction between glycols such as ethylene glycol, propylene glycol, butylene glycol, methoxypolyethylene glycol, and pentaerythritol and dicarboxylic acids such as terephthalic acid, isophthalic acid, and their dimethyl compounds. The most typical polyester is polyethylene terephthalate.

The organic fiber cord is preferably an organic fiber cord obtained by twisting a plurality of monofilaments, especially for the purpose of reinforcing rubber articles such as tire articles and conveyor belts. The organic fiber cord is preferably an organic fiber cord obtained by subjecting monofilaments to first twist and then second twist. In this case, it is more preferable that the twist coefficient of the first twist is 1,300 or more and 2,500 or less and/or the twist coefficient of the second twist is 900 or more and 1,800 or less.

### <Rubber>

Type of the rubber to be bonded to the resin by using the adhesive composition for rubber-resin bonding according to the present disclosure is not particularly limited, and various types of rubbers can be used. As the rubber, a rubber composition obtained by blending a rubber component with a compounding agent commonly used in the rubber industry is preferable. Type of the rubber component is not particularly limited, and examples thereof include natural rubber, conjugated diene-based synthetic rubbers such as polyisoprene rubber (IR), polybutadiene rubber (BR), styrene-butadiene copolymer rubber (SBR), acrylonitrile-butadiene rubber (NBR), chloroprene rubber (CR), and butyl rubber (IIR), ethylene-propylene copolymer rubber (EPM), ethylene-propylene-diene copolymer rubber (EPDM), and polysiloxane rubber. Of those examples, natural rubber and conjugated diene-based synthetic rubbers are preferable. These rubber components may be used singly or in combination of two or more.

### <(A) synthetic rubber latex having an unsaturated diene>

"(A) The synthetic rubber latex having an unsaturated diene" in the adhesive composition for rubber-resin bonding according to the present disclosure is a synthetic rubber latex containing an unsaturated diene that is sulfur-vulcanizable.

In one embodiment of the present disclosure, "(A) the synthetic rubber latex having an unsaturated diene" contained in the adhesive composition for rubber-resin bonding is a component for causing an adhesive layer formed by the adhesive composition for rubber-resin bonding to adhere to the coating rubber composition as its adherend. Not only (A) the synthetic rubber latex having an unsaturated diene undergoes compatibilization with the rubber polymer contained in the coating rubber composition as the adherend but also the unsaturated diene site thereof is covulcanized with the rubber, such that adhesion by rubber-latex covulcanization is effected. The adhesive composition for rubber-resin bonding according to the present disclosure containing "(A) the synthetic rubber latex having an unsaturated diene" achieves good adhesiveness between the resin and the coating rubber composition, accordingly.

(A) Type of the synthetic rubber latex having an unsaturated diene is not limited, and examples thereof include styrene-butadiene copolymer rubber latex, vinylpyridine-styrene-butadiene copolymer rubber latex, carboxyl group-modified styrene-butadiene copolymer rubber latex, nitrile rubber latex, and chloroprene rubber latex. These may be used singly or in combination of two or more.
Of those examples, vinylpyridine-styrene-butadiene copolymer rubber latex is preferable. Vinylpyridine-styrene-butadiene copolymer rubber latex is a conventional rubber latex widely used in adhesive compositions for rubber-resin bonding and articles such as tires. When contained in the adhesive composition for rubber-resin bonding according to the present disclosure, vinylpyridine-styrene-butadiene copolymer rubber latex achieves good bond between the adhesive layer and the adherend rubber, and allows the resin (in particular, organic fiber code) to deform without breakage of the adhesive layer due to its advantage of being relatively soft and flexible.

A content (solid content) of (A) the synthetic rubber latex having an unsaturated diene in the adhesive composition for rubber-resin bonding according to the present disclosure is not particularly limited, but is preferably 25 mass% or more, more preferably 35 mass% or more, and even more preferably 55 mass% or more, and is preferably 80 mass% or less, and more preferably 75 mass% or less. When the content is 25 mass% or more, the compatibilization between the rubber polymers of the adherend rubber composition and the rubber latex contained in the adhesive composition is more optimized, so that, for example, in the case of using the organic fiber cord as the resin, the adhesion state of the coating rubber in the organic fiber cord-rubber composite is improved. When the content is 80 mass% or less, it is possible to secure at least a certain amount, relative to the amount of the synthetic rubber latex, of the resin component contained as another component in the adhesive composition, whereby satisfactorily high cohesive fracture resistance of the adhesive layer is ensured and occurrence of fracture in the adhesive layer is well prevented, such that satisfactory adhesiveness can be obtained.

(A) The synthetic rubber latex having an unsaturated diene can be obtained, for example, by dissolving an emulsifier such as potassium rosinate in water, then adding the foregoing monomer mixture thereto, further adding an electrolyte such as sodium phosphate and a peroxide as polymerization initiators to perform polymerization, and, after a predetermined conversion rate is reached, adding a charge transfer agent to stop the polymerization, and finally removing residual monomers therefrom. It is preferable to also use a chain transfer agent in the polymerization.

As the emulsifier, one or more selected from; anionic surfactants such as alkali metal salts of fatty acid, alkali metal salts of rosin acid, formaldehyde-condensed sodium naphthalene sulfonates, sulfuric acid esters of higher alcohols, alkylbenzene sulfonates, and aliphatic sulfonates; and nonionic surfactants such as alkyl ester, alkyl ether, alkylphenyl ether, or the like of polyethylene glycol are used.
Of those emulsifiers, metal salt of rosin acid is preferably included, which may be used singly (only one type) or used in combination with one or more other emulsifiers.
In the preparation of (A) the synthetic rubber latex having an unsaturated diene in the Examples of the present disclosure, an alkali metal salt of rosin acid was used singly as an emulsifier.
Rosin acid is a mixture of resin acids having similar chemical structures, mainly composed of tricyclic diterpenes obtained from pine resin and the like. Each of the resin acids has three ring structures, two double bonds, and one carboxyl group. The resin acid has highly reactive functional groups, wherein the two double bond portions reacting with unsaturated carboxylic acid and/or the one carboxyl group portion undergoes esterification with a methylol terminal of resol-type phenolic resin.
The amount of the emulsifier to be used is typically 0.1 parts to 8 parts by mass and preferably 1 part to 5 parts by mass with respect to 100 parts by mass of all monomers used in latex polymerization.

Examples of the polymerization initiator that can be used include water-soluble initiators such as potassium persulfate, sodium persulfate, and ammonium persulfate, redox initiators, and oil-soluble initiators such as benzoyl peroxide.
In the preparation of (A) the synthetic rubber latex having an unsaturated diene in the Examples of the present disclosure, potassium persulfate was used as a polymerization initiator.

Examples of the chain transfer agent that can be used include monofunctional alkyl mercaptans such as n-hexylmercaptan, t-dodecylmercaptan, n-dodecylmercaptan, n-octylmercaptan, n-tetradecylmercaptan, and t-hexylmercaptan; bifunctional mercaptans such as 1,10-decanedithiol and ethylene glycol dithioglycolate; trifunctional mercaptans such as 1,5,10-canditrithiol and trimethylolpropane tristhioglycolate; tetrafunctional mercaptans such as pentaerythritol tetrakisthioglycolate; disulfides; halogen compounds such as carbon tetrachloride, carbon tetrabromide, and ethylene bromide; and α-methylstyrene dimer, terpinolene, α-terpinene, dipentene, and allyl alcohol. These are used singly or in combination of two or more.
Of those chain transfer agents, alkyl mercaptans are preferable, and n-octylmercaptan and t-dodecylmercaptan are more preferable.
In the preparation of (A) the synthetic rubber latex having an unsaturated diene in the Examples of the present disclosure, t-dodecylmercaptan was used as a chain transfer agent.
The amount of such a chain transfer agent to be used is typically 0.01 parts to 5 parts by mass and preferably 0.1 parts to 3 parts by mass with respect to 100 parts by mass of all monomers used in latex polymerization.

In the latex, not only the foregoing components but also additives such as antioxidants like hindered phenols; silicone-based, higher alcohol-based, mineral oil-based antifoaming agents; reaction terminators; and antifreezing agents may be optionally used.

### <<Vinylpyridine-styrene-butadiene copolymer rubber latex>>

The vinylpyridine-styrene-butadiene copolymer rubber latex is typically obtained by terpolymerizing a vinylpyridine-based monomer, a styrene-based monomer, and a conjugated diene-based butadiene monomer, but may further contain any other monomer copolymerizable with these monomers.

The vinylpyridine-based monomer encompasses vinylpyridine and substituted vinylpyridine obtained by substituting a hydrogen atom in the vinylpyridine with a substituent. Examples of the vinylpyridine-based compound include 2-vinylpyridine, 3-vinylpyridine, 4-vinylpyridine, 2-methyl-5-vinylpyridine, and 5-ethyl-2-vinylpyridine. Of those examples, 2-vinylpyridine is preferable. These vinylpyridine-based monomers may be used singly or in combination of two or more.

The styrene-based monomer encompasses styrene and substituted styrene obtained by substituting a hydrogen atom in the styrene with a substituent. Examples of the styrene-based monomer include styrene, α-methylstyrene, 2-methylstyrene, 3-methylstyrene, 4-methylstyrene, 2,4-diisopropylstyrene, 2,4-dimethylstyrene, 4-t-butylstyrene, and hydroxymethylstyrene. Of those examples, styrene is preferable. These styrene-based monomers may be used singly or in combination of two or more.

Examples of the conjugated diene-based butadiene monomer include aliphatic conjugated butadiene compounds such as 1,3-butadiene and 2-methyl-1,3-butadiene. Of those examples, 1,3-butadiene is preferable. These conjugated diene-based butadiene monomers may be used singly or in combination of two or more.

A known method may be used for the synthesis of the vinylpyridine-styrene-butadiene copolymer rubber latex. Specifically, the method described in JP H09-078045 A studied by the inventor of the present disclosure may be used. With this method, it is possible to provide various compositions and intra-particle structures, such as copolymers uniform or different in composition ratio within the same particle of the vinylpyridine-styrene-butadiene copolymer rubber latex.

For the vinylpyridine-styrene-butadiene copolymer rubber latex, commercially available copolymers uniform in monomer mixing ratio of composition within the same particle include "Nipol 2518" produced by Zeon Corporation and "PYRATEX" produced by Nippon A&L Inc. Commercially available copolymers different in monomer mixing ratio of composition within the same particle include "V0658" produced by JSR Corporation. Any of these products may be used as (A) the synthetic rubber latex having an unsaturated diene in the adhesive composition for rubber-resin bonding according to the present disclosure.

The monomer ratio of vinylpyridine : styrene : butadiene in the vinylpyridine-styrene-butadiene copolymer rubber latex is not limited, but it is preferable that the copolymer constituting the vinylpyridine-styrene-butadiene copolymer particles contains a copolymer obtained by polymerizing a monomer mixture including therein 5 mass% to 20 mass% of vinylpyridine, 10 mass% to 40 mass% of styrene, and 45 mass% to 75 mass% of butadiene. When the vinylpyridine content is 5 mass% or more, the amount of pyridine sites that have the vulcanization accelerating effect in the rubber component is optimized, whereby the degree of crosslinking by sulfur increases and the adhesiveness of the entire adhesive layer further improves accordingly. When the vinylpyridine content is 20 mass% or less, a hard adhesive agent can be obtained without over-vulcanization in terms of the degree of crosslinking of the rubber. When the styrene content is 10 mass% or more, the strength of the latex particles and the adhesive layer is sufficiently high and the adhesiveness is further improved. When the styrene content is 40 mass% or less, it is possible to obtain appropriate covulcanizability between the adhesive layer and the adherend rubber, while ensuring satisfactory adhesiveness. When the butadiene content is 45 mass% or more, crosslinking can be formed in a more satisfactory manner. When the butadiene content is 75 mass% or less, the degree of crosslinking can be made appropriate, whereby durability depending on volume and changes in modulus can be favorably retained.
In (A) the synthetic rubber latex having an unsaturated diene in the Examples of the present disclosure, the composition ratio of the monomer mixture of vinylpyridine : styrene : butadiene was 15:15:70.

### <(B) Water-soluble carbodiimide>

"(B) The water-soluble carbodiimide" in the adhesive composition for rubber-resin bonding according to the present disclosure is water-soluble carbodiimide, which includes aqueous and partially water-soluble carbodiimide. The water-soluble carbodiimide is a compound having a carbodiimide (chemical formula: -N=C=N-) and a hydrophilic segment in its molecule. The water-soluble carbodiimide can be used as a dehydration condensation agent capable of forming an ester bond or an amide bond between a COOH group and an OH group or an amino group in the compounds contained in a water solution. For example, it is known that 1-ethyl-3-(3-(dimethylaminopropyl)carbodiimide (WSC) activates a carboxyl group and the resulting active intermediate can react with amino/hydroxyl groups to form amide/ester.

Water-soluble carbodiimides are known as water-soluble condensation agents, and are widely used in condensation reactions between carboxylic acids and alcohols and amines. Although there have been studies to provide water-soluble carbodiimide as an adhesive composition for resin crosslinking, substantially no studies have been made to mix water-soluble carbodiimide with a rubber component such as latex to obtain an adhesive composition for bonding rubber and resin.

A conventional adhesive composition containing resorcin and formaldehyde is presumed to have the following mechanism: the resorcin and the formaldehyde form a resole-type resorcin-formaldehyde condensation product between rubber latex particles dispersed in a water solvent; and the methylol group of the resol-type resorcin-formaldehyde condensation product is added to rosinate or the like used as an emulsifier on the surface of the rubber latex in the adhesive composition, so that cocondensation undergoes and a chemically crosslinked structure or coating of the phenolic resin is formed. It is assumed that crosslinking between the rubber latex and the resin contained in the adhesive composition is obtained by the coating as the chemically crosslinked structure of phenolic resin thus formed.
On the other hand, the adhesive composition for rubber-resin bonding according to the present disclosure is presumed to have the following mechanism: (B) the water-soluble carbodiimide coats a surface of (A) the synthetic rubber latex having an unsaturated diene; (A) the synthetic rubber latex having an unsaturated diene, due to the highly reactive carboxylic acid such as rosinate emulsified on the surface thereof, is crosslinked by dehydration condensation bonding with (B) the water-soluble carbodiimide at the carbodiimide sites thereof; and through the coating of (B) the water-soluble carbodiimide thus crosslinked and the effects collectively caused by a crosslinkable resin component such as (C) the thermally crosslinkable compound [preferably (D) an aqueous compound having a (thermo-dissociably blocked) isocyanate group or (E) an epoxide compound] contained in the adhesive composition, as well, the adherend resin can be bonded to the adherend rubber.

(B) The water-soluble carbodiimide is preferably a water-soluble salt such as a hydrochloride or a sulfate. Specific examples of the water-soluble carbodiimide (B) include 1-ethyl-3-(3-dimethylaminopropyl)carbodiimide hydrochloride (EDC); water-soluble salts of 1-cyclohexyl-3-(2-morpholinoethyl)carbodiimide such as 1-cyclohexyl-3-(2-morpholinoethyl)carbodiimide-metho-p-toluene sulfate; and triazine-based condensation agents such as 4-(4,6-dimethoxy-1,3,5-triazin-2-yl)-4-methylmorpholinium chloride (DMT-MM). 1-ethyl-3-(3-dimethylaminopropyl)carbodiimide hydrochloride (EDC) is preferably used.

In preparation of the adhesive composition for rubber-resin bonding according to the present disclosure, (B) the water-soluble carbodiimide may be prepared, by adding water thereto, as an aqueous solution, so that the aqueous solution is added to (A) the synthetic rubber latex having an unsaturated diene.

The content (solid content) of the water-soluble carbodiimide (B) in the adhesive composition for rubber-resin bonding according to the present disclosure is not particularly limited, but is preferably 0.1 mass% or more, more preferably 0.3 mass% or more, and even more preferably 0.5 mass% or more, and is preferably 15 mass% or less, more preferably 10 mass% or less, even more preferably 7 mass% or less, and particularly preferably 5 mass% or less. When the content is 0.1 mass% or more, the effect of improving the adhesiveness between the resin and the rubber is enhanced. When the content is 15 mass% or less, the amount of the water-soluble carbodiimide contained in the adhesion layer is not excessively high, so that satisfactorily high fracture resistance of the adhesion layer can be ensured.

### <(C) Thermally crosslinkable compound>

In the adhesive composition for rubber-resin bonding according to the present disclosure, (C) the thermally crosslinkable compound functions as a crosslinking agent and contributes to improved adhesiveness between the resin and the coating rubber composition. As (C) the thermally crosslinkable compound, (D) the aqueous compound having a (thermo-dissociably blocked) isocyanate group and (E) the epoxide compound are preferable. In this case, the adhesiveness between the resin and the coating rubber composition is further improved.

The content (solid content) of (C) the thermally crosslinkable compound is not particularly limited, but is preferably 5 mass% or more, and is preferably 75 mass% or less. When the content is 5 mass% or more, the adhesion between the resin and the coating rubber composition is further improved. When the content is 75 mass% or less, it is possible to secure at least a certain amount, relative to the amount of (C) the thermally crosslinkable compound, of other components such as the rubber latex contained in the adhesive composition, whereby the adhesion between the resin and the adherend rubber is further improved.

### <(D) Aqueous compound having (thermo-dissociably blocked) isocyanate group>

The "(thermo-dissociably blocked) isocyanate group" in (D) the aqueous compound having a (thermo-dissociably blocked) isocyanate group represents a thermo-dissociably blocked isocyanate group or an isocyanate group, and encompasses the following (a) to (d):
(a) a thermo-dissociably blocked isocyanate group generated as a result of an isocyanate group reacting with a thermally dissociable blocking agent for the isocyanate group,
(b) an isocyanate group as an isocyanate group being unreacted with a thermally dissociable blocking agent provided for the isocyanate group,
(c) an isocyanate group generated as a result of a thermally dissociable blocking agent dissociating from a thermo-dissociably blocked isocyanate group, and
(d) an isocyanate group.

The "aqueous" in (D) the aqueous compound having a (thermo-dissociably blocked) isocyanate group means that the compound is water-soluble or water-dispersible. Herein, "water-soluble" does not necessarily mean being completely water soluble but may also encompass being partially water soluble or a state not exhibiting phase separation in an aqueous solution of the adhesive composition according to the present disclosure.

The thermally dissociable blocking agent is not particularly limited, as long as it is a blocking agent compound which is capable of protecting the isocyanate group from any chemical reaction and being dissociated from the isocyanate group by heat treatment according to necessity, to restore the isocyanate group. Specifically, it is preferable that the temperature of the heat treatment for thermal curing after attaching and drying of the adhesive treatment liquid corresponds to the thermal dissociation temperature that can recover the crosslinking reactivity of the isocyanate group whose reactivity has been suppressed by being blocked by the thermally dissociable blocking agent. Non-limiting examples of the blocking agent include alcohols, phenols, active methylenes, oximes, lactams, and amines. Specific examples include lactams such as ε-caprolactam, δ-valerolactam, and γ-butyrolactam; phenols such as phenol, cresol, ethylphenol, butylphenol, octylphenol, nonylphenol, dinonylphenol, thiophenol, chlorophenol, and amylphenol; oximes such as methyl ethyl ketoxime, acetoxime, acetophenone oxime, benzophenone oxime, and cyclohexanone oxime; alcohols such as methanol, ethanol, butanol, isopropyl alcohol, butyl alcohol, and cyclohexanol; dialkyl malonates such as dimethylmalonate and diethylmalonate; active methylenes such as methyl acetoacetate, ethyl acetoacetate, and acetylacetone; mercaptans such as butyl mercaptan and dodecyl mercaptan; amides such as acetanilide and acetic amide; imides such as succinimide, phthalimide, and maleic imide; sulfites such as sodium bisulfite; cellosolves such as methyl cellosolve, ethyl cellosolve, and butyl cellosolve; pyrazoles such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; amines such as dimethylamine, diethylamine, di-n-propylamine, diisopropylamine, dicyclohexylamine, diphenylamine, xylidine, N,N-diethylhydroxyamine, N,N'-diphenylformamidine, 2-hydroxypyridine, 3-hydroxypyridine, and 2-mercaptopyridine; and triazoles such as 1,2,4-triazole. A mixture of two or more of those examples may be used.
As the blocking agent, phenol, ε-caprolactam, and ketoxime are suitably used because they ensure stable thermal curing of the adhesive composition by thermal dissociation during heating.

Specifically, (D) the aqueous compound having a (thermo-dissociably blocked) isocyanate group contains an aromatic polyisocyanate or an araliphatic polyisocyanate. Examples of the aromatic isocyanate include phenylene diisocyanates such as m-phenylene diisocyanate and p-phenylene diisocyanate; tolylene diisocyanates such as 2,4-tolylene diisocyanate and 2,6-tolylene diisocyanate (TDI); diphenylmethane diisocyanates such as 2,4'-diphenylmethane diisocyanate, 4,4'-diphenylmethane diisocyanate (MDI), dialkyldiphenylmethane diisocyanate, and tetraalkyldiphenylmethane diisocyanate; polymethylene polyphenyl polyisocyanate (polymeric MDI); m- or p-isocyanatophenylsulfonyl isocyanates; diisocyanatobiphenyls such as 4,4'-diisocyanatobiphenyl and 3,3'-dimethyl-4,4'-diisocyanatobiphenyl; and naphthalene diisocyanates such as 1,5-naphthylene diisocyanate. Examples of the araliphatic polyisocyanate include xylylene diisocyanates such as m-xylylene diisocyanate, p-xylylene diisocyanate (XDI), and tetramethyl xylylene diisocyanate; diethylbenzene diisocyanate; and α,α,α,α-tetramethylxylylene diisocyanate (TMXDI). Modified products such as carbodiimides, polyols, and allophanates of the foregoing polyisocyanates are also acceptable.
Of those polyisocyanates containing an aromatic ring in the molecule, aromatic isocyanates are preferable, tolylene diisocyanate (TDI), diphenylmethane diisocyanate (MDI), or polymethylene polyphenyl polyisocyanate (polymeric MDI) is more preferable, and diphenylmethane diisocyanate (MDI) is particularly preferable, from the viewpoint of the cord bundling property of the adhesive composition.

(D) The aqueous compound having a (thermo-dissociably blocked) isocyanate group is preferably, but is not limited to, a water-dispersible (thermo-dissociably blocked) isocyanate compound that is an addition product of a polyisocyanate having an aromatic ring and a blocking agent having at least one active hydrogen group. In this case, the adhesion between the resin and the coating rubber composition is further improved.

(D) The aqueous compound having a (thermo-dissociably blocked) isocyanate group is more preferably, but is not limited to, an aqueous urethane compound having a (thermo-dissociably blocked) isocyanate group. In this case, too, the adhesions between the resin and the coating rubber composition is further improved.
The aqueous urethane compound having a (thermo-dissociably blocked) isocyanate group will be described in detail later.

The content (solid content) of (D) the aqueous compound having a (thermo-dissociably blocked) isocyanate group is not particularly limited, but is preferably 5 mass% or more, more preferably 10 mass% or more, and even more preferably 15 mass% or more, and is preferably 75 mass% or less, more preferably 70 mass% or less, and even more preferably 55 mass% or less. When the content is 5 mass% or more, the adhesiveness between the resin and the coating rubber composition is further improved. When the content is 75 mass% or less, it is possible to secure at least a certain amount, relative to the amount of (D) the aqueous compound having a (thermo-dissociably blocked) isocyanate group, of other components such as the rubber latex contained in the adhesive composition, whereby the adhesion between the resin and the adherend rubber is further improved.

### «Functional effects as adhesion promoter»

A synthetic resin material of polyester such as polyethylene terephthalate, which is widely used as organic fiber cord, consists of flat linear polymer chains. The surfaces of the polymer chains or the gaps between the polymer chains have a π electronic atmosphere derived from aromatic compounds and the like contained in the polymer chains. Moreover, polyester has particularly few hydroxyl groups on the surface thereof, as compared with 6,6-nylon. Hence, to achieve sufficient adhesiveness, adhesive compositions used for organic fiber cord made of polyester conventionally contain, as adhesion promoters, molecules with a planar structure having aromatic rings with aromatic π electrons on the sides thereof (which structure constitutes a "portion easily diffusible into resin"), so that:
- the adhesive composition disperses into the gaps between the polymer chains of the organic fiber cord; and
- the adhesive layer formed by the adhesive composition adheres to the surfaces of the polymer chains of the organic fiber cord.

As a specific example of such an adhesion promoter, the foregoing "water-dispersible (thermo-dissociably blocked) isocyanate compound that is an addition product of a polyisocyanate having an aromatic ring and a blocking agent having at least one active hydrogen group" has been conventionally used.

The adhesive composition for rubber-resin bonding according to the present disclosure more preferably contains the aqueous urethane compound having a (thermo-dissociably blocked) isocyanate group that has, in the molecular structure thereof, not only a hydrophobic aromatic polyisocyanate part as a "portion easily diffusible into the resin" but also a hydrophilic molecular chain part as a "portion not easily diffusible into resin".

The term "aqueous" of the "aqueous urethane compound" means that the compound is water-soluble or water-dispersible. Herein, "water-soluble" does not necessarily mean being completely water soluble but may also encompass being partially water soluble or a state not exhibiting phase separation in an aqueous solution of the adhesive composition.

The "urethane compound" in the "aqueous urethane compound" is a compound having a covalent bond formed between nitrogen of amine and carbon of a carbonyl group, and is represented by the following general formula (2): 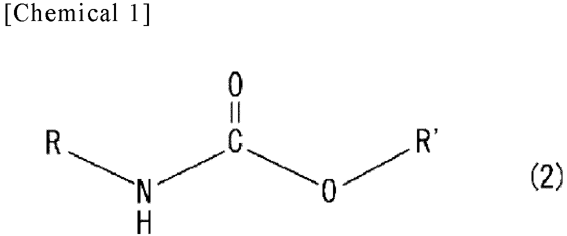 In the general formula (2), R and R' each represent a hydrocarbon group.

The molecular weight of the aqueous urethane compound having a (thermo-dissociably blocked) isocyanate group is not particularly limited as long as its aqueousness is maintained, but the number-average molecular weight thereof is preferably 1,500 to 100,000, and particularly preferably 9,000 or less.

A method for synthesizing the aqueous urethane compound having a (thermo-dissociably blocked) isocyanate group may be a known method such as the method described in JP S63-051474 A, without being limited thereto.

### <<Preferred embodiment of aqueous compound having (thermo-dissociably blocked) isocyanate group>>

A preferred embodiment of the aqueous urethane compound having a (thermo-dissociably blocked) isocyanate group is a reaction product obtained by: mixing (α) an organic polyisocyanate compound having three or more and five or less functional groups and having a number-average molecular weight of 2,000 or less, (β) a compound having two or more and four or less active hydrogen groups and having a number-average molecular weight of 5,000 or less, (γ) a thermally dissociable blocking agent, and (δ) a compound having at least one active hydrogen group and at least one anionic, cationic, or nonionic hydrophilic group such that the mixing ratio of (α) is 40 mass% or more and 85 mass% or less, the mixing ratio of (β) is 5 mass% or more and 35 mass% or less, the mixing ratio of (γ) is 5 mass% or more and 35 mass% or less, and the mixing ratio of (δ) is 5 mass% or more and 35 mass% or less with respect to the total amount of (α), (β), (γ), and (δ); and causing the (α), (β), (γ), and (δ) to react with each other, wherein the composition ratio of the (thermo-dissociably blocked) isocyanate group in the reaction product is 0.5 mass% or more and 11 mass% or less when the molecular weight of an isocyanate group (-NCO) is 42. In the preferred embodiment described above, the adhesion between the resin and the coating rubber composition is further improved. The preferred embodiment described above exhibits good adhesion because the aqueous urethane compound having a (thermo-dissociably blocked) isocyanate group possesses both a site composed of a (thermo-dissociably blocked) isocyanate group and a hydrophilic site having a hydrophilic group, thereby having the advantage of increased "self-water solubility" (increased readiness to dissolve into water by itself) of the urethane compound.

As (α) the organic polyisocyanate compound having three or more and five or less functional groups and a number-average molecular weight of 2,000 or less, an aromatic polyisocyanate compound and its oligomer are preferable, without being limited thereto. Other aliphatic, alicyclic, and heterocyclic polyisocyanate compounds and oligomers thereof are also acceptable as (α) the organic polyisocyanate compound. The aqueous urethane compound having a (thermo-dissociably blocked) isocyanate group, which is a reaction product obtained by causing (α) the organic polyisocyanate compound having three or more and five or less functional groups and a number-average molecular weight of 2,000 or less to react, as described above, disperses more easily into the gaps of the polymer chains of the resin.
Specific examples of the aliphatic polyisocyanate compound include ethylene diisocyanate, 1,4-tetramethylene diisocyanate, 1,6-hexamethylene diisocyanate, 1,12-dodecane diisocyanate, 2,2,4-trimethylhexamethylene diisocyanate, 2,4,4-trimethylhexamethylene diisocyanate, dimer acid diisocyanate, and lysine diisocyanate. Specific examples of the alicyclic polyisocyanate compound include cyclobutane-1,3-diisocyanate, cyclohexane-1,3-diisocyanate, cyclohexane-1,4-diisocyanate , isophorone diisocyanate, 4,4'-methylenebis(cyclohexyl isocyanate), methylcyclohexane-2,4-diisocyanate, methylcyclohexane-2,6-diisocyanate, and 1,3-(isocyanatomethyl)cyclohexane. Specific examples of the heterocyclic polyisocyanate compound include tolylene diisocyanate adducts of 1,3,5-tris(2'-hydroxyethyl)isocyanuric acid. Specific examples of the aromatic polyisocyanate compound include m-phenylene diisocyanate, p-phenylene diisocyanate, 2,4- tolylene diisocyanate, 2,6-tolylene diisocyanate, m-xylylene diisocyanate, p-xylylene diisocyanate, 2,4'-diphenylmethane diisocyanate, 4,4'-diphenylmethane diisocyanate, m-tetramethylxylylene diisocyanate, p-tetramethylxylylene diisocyanate, methine tris(4-phenylisocyanate), tris(4-isocyanatophenyl)methane, tris(4-isocyanatophenyl ester) thiophosphate, 3-isopropenyl-α',α'-dimethylbenzyl isocyanate, oligomer mixtures thereof, and modified products such as carbodiimides, polyols, and allophanates of these polyisocyanate compounds.
Of those examples, aromatic polyisocyanate compounds are preferable, and methylene diphenyl polyisocyanate and polyphenylene polymethylene polyisocyanate are particularly preferable. Polyphenylene polymethylene polyisocyanate having a number-average molecular weight of 2,000 or less is preferable, and polyphenylene polymethylene polyisocyanate having a number-average molecular weight of 1,000 or less is particularly preferable. The aqueous urethane compound having a (thermo-dissociably blocked) isocyanate group, which is a reaction product obtained by causing (α) the organic polyisocyanate compound having three or more and five or less functional groups and a number-average molecular weight of 2,000 or less to react, disperses more easily into the gaps of the polymer chains of the resin.

(β) The compound having two or more and four or less active hydrogen groups and a number-average molecular weight of 5,000 or less, of which type is not particularly limited, is, for example, a specific compound selected from the group consisting of the following (i) to (vii):
(i) polyhydric alcohols having two or more and four or less hydroxy groups and a number-average molecular weight of 5,000 or less,
(ii) polyamines having two or more and four or less primary and/or secondary amino groups and a number-average molecular weight of 5,000 or less,
(iii) aminoalcohols having two or more and four or less primary and/or secondary amino groups and hydroxy groups and having a number-average molecular weight of 5,000 or less,
(iv) polyester polyols having two or more and four or less hydroxy groups and a number-average molecular weight of 5,000 or less,
(v) polybutadiene polyols having two or more and four or less hydroxy groups and a number-average molecular weight of 5,000 or less, and copolymers thereof with other vinyl monomers,
(vi) polychloroprene polyols having two or more and four or less hydroxy groups and a number-average molecular weight of 5,000 or less, and copolymers thereof with other vinyl monomers, and
(vii) polyether polyols having two or more and four or less hydroxy groups and a number-average molecular weight of 5,000 or less,
which are: polyamines; C₂₋₄ alkylene oxide polyaddition products of polyhydric phenols and aminoalcohols; C₂₋₄ alkylene oxide polyaddition products of C_{≥3} polyhydric alcohols; C₂₋₄ alkylene oxide copolymers; or C₃₋₄ alkylene oxide polymers.

In connection with the aqueous urethane compound having a (thermo-dissociably blocked) isocyanate group, the "active hydrogen group" means a group containing hydrogen that becomes active hydrogen (atomic hydrogen (hydrogen radical) and hydride ion (hydride)) under suitable conditions. Examples of the active hydrogen group include an amino group and a hydroxyl group.

Non-limiting examples of the compound having at least one active hydrogen group and at least one anionic hydrophilic group, of "(δ) the compound having at least one active hydrogen group and at least one anionic, cationic, or nonionic hydrophilic group", include: aminosulfonic acids such as taurine, N-methyl taurine, N-butyl taurine, and sulfanilic acid; and aminocarboxylic acids such as glycine and alanine.

The method of synthesizing the aqueous urethane compound having a (thermo-dissociably blocked) isocyanate group by mixing (α), (β), (γ), and (δ) to cause them to react may be a known method such as the method described in JP S63-051474 A, without being limited thereto.

### <<Another preferred embodiment of (D) aqueous compound having (thermo-dissociably blocked) isocyanate group>>

Another preferred embodiment of the aqueous urethane compound having a (thermo-dissociably blocked) isocyanate group is represented by the following general formula (1): 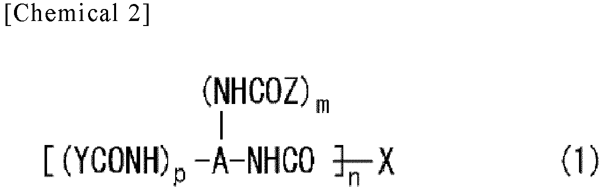 In the general formula (1), "A" is a residual group after dissociation/elimination of an active hydrogen group from an organic polyisocyanate compound, "X" is a residual group after dissociation of an active hydrogen group from a polyol compound having two or more and four or less hydroxyl groups and a number-average molecular weight of 5,000 or less, "Y" is a residual group after dissociation of an active hydrogen group from a thermally dissociable blocking agent, "Z" is a residual group after dissociation of an active hydrogen group from a compound having at least one active hydrogen group and at least one salt-forming group or hydrophilic polyether chain, "n" is an integer of 2 or more and 4 or less, and p + m is an integer of 2 or more and 4 or less (m ≥ 0.25). In this case, too, the adhesion between the resin and the coating rubber composition is further improved. The another preferred embodiment described above exhibits good adhesion because the aqueous urethane compound having a (thermo-dissociably blocked) isocyanate group possesses both a site composed of a (thermo-dissociably blocked) isocyanate group and a hydrophilic site having a hydrophilic group, thereby having the advantage of increased "self-water solubility" (increased readiness to dissolve into water by itself) of the urethane compound.

"An organic polyisocyanate compound" in connection with the "residual group after dissociation of an active hydrogen group from an organic polyisocyanate compound" as A in the general formula (1) preferably contains an aromatic ring. The presence of an aromatic ring facilitates dispersion of the aqueous urethane compound having a (thermo-dissociably blocked) isocyanate group into the gaps between the polymer chains of the resin. Non-limiting examples of the organic polyisocyanate compound include methylene diphenyl polyisocyanate and polyphenylene polymethylene polyisocyanate. Polyphenylene polymethylene polyisocyanate having a number-average molecular weight of 6,000 or less is preferable, and polyphenylene polymethylene polyisocyanate having a number-average molecular weight of 4,000 or less is particularly preferable.

"A polyol compound having two or more and four or less hydroxy groups and a number-average molecular weight of 5,000 or less" in connection with the "residual group after dissociation of an active hydrogen group from a polyol compound having two or more and four or less hydroxyl groups and having a number-average molecular weight of 5,000 or less" as X in the general formula (1), of which type is not particularly limited, is, for example, a specific compound selected from the group consisting of the following (i) to (vi):
(i) polyhydric alcohols having two or more and four or less hydroxy groups and a number-average molecular weight of 5,000 or less,
(ii) aminoalcohols having two or more and four or less primary and/or secondary amino groups and hydroxy groups and having a number-average molecular weight of 5,000 or less,
(iii) polyester polyols having two or more and four or less hydroxy groups and a number-average molecular weight of 5,000 or less,
(iv) polybutadiene polyols having two or more and four or less hydroxy groups and a number-average molecular weight of 5,000 or less, and copolymers thereof with other vinyl monomers,
(v) polychloroprene polyols having two or more and four or less hydroxy groups and a number-average molecular weight of 5,000 or less, and copolymers thereof with other vinyl monomers, and
(vi) polyether polyols having two or more and four or less hydroxy groups and a number-average molecular weight of 5,000 or less,
which are: polyamines; C₂₋₄ alkylene oxide polyaddition products of polyhydric phenols and aminoalcohols; C₂₋₄ alkylene oxide polyaddition products of C_{≥3} polyhydric alcohols; C₂₋₄ alkylene oxide copolymers; or C₃₋₄ alkylene oxide polymers.

As the aqueous urethane compound having a (thermo-dissociably blocked) isocyanate group, commercially available products such as "ELASTRON BN27", "ELASTRON BN77", and "ELASTRON BN11" produced by DKS Co. Ltd. may be used, without being limited thereto. The "BN77" was used in the below-described Examples.

### <(E) Epoxide compound>

One embodiment of the adhesive composition for rubber-resin bonding according to the present disclosure contains (A) the synthetic rubber latex having an unsaturated diene, (B) the water-soluble carbodiimide, and (E) the epoxide compound.

(E) The epoxide compound is a compound having oxacyclopropane (oxirane) (epoxy group) which is a three-membered ring ether in its structural formula.

(E) The epoxide compound functions as a crosslinking agent component in the adhesive composition. That is, when the adhesive composition contains (E) the epoxide compound, crosslinking is introduced between the carbodiimide portion of (B) the water-soluble carbodiimide and the epoxy group, which not only improves fracture resistance of the adhesive layer but also significantly improves adhesion performance at high temperatures.

(E) The epoxide compound is preferably mixed with (D) the aqueous compound having a (thermo-dissociably blocked) isocyanate group and heated. As a result of mixing and heating (E) the epoxide compound with (D) the aqueous compound having a (thermo-dissociably blocked) isocyanate group, crosslinking effected by a nucleophilic reaction between the epoxy group of (E) the epoxide compound and the amine, alcohol, thiol, phenol , carboxylic acid, isocyanate (resulting from dissociation of the thermally dissociable block), or the like of the (D) the aqueous compound having a (thermo-dissociably blocked) isocyanate group is added to the urethane bonds as the main bonds in the adhesive composition, so that creep and flow due to stress in the high-temperature region are suppressed.
The epoxy group in (E) the epoxide compound is preferably multifunctional. The multifunctional epoxy group enhances the effect of suppressing creep and flow described above and further enhances the fracture resistance of the adhesive layer formed by the adhesive composition and thus the adhesiveness at high temperatures.

(E) The epoxide compound is preferably a compound containing two or more epoxy groups in one molecule. (E) The epoxide compound is particularly preferably a compound containing four or more epoxy groups in one molecule. The epoxy groups are multifunctional in those cases, whereby the fracture resistance of the adhesive layer formed by the adhesive composition is further enhanced and the adhesiveness at high temperatures is further enhanced as mentioned above.
In the case where (E) the epoxide compound has two or more epoxy groups in one molecule, the adhesive composition for rubber-resin bonding containing (E) the epoxide compound can further suppress creep and flow due to stress in the high-temperature region, thereby further enhancing the adhesiveness at high temperatures.

Specific examples of (E) the epoxide compound include reaction products of epichlorohydrin and polyhydric alcohols such as diethylene glycol diglycidyl ether, polyethylene diglycidyl ether, polypropylene glycol diglycidyl ether, neopentyl glycol diglycidyl ether, 1,6-hexanediol diglycidyl ether, glycerol polyglycidyl ether, trimethylolpropane polyglycidyl ether, polyglycerol polyglycidyl ether, pentaerythiol polyglycidyl ether, diglycerol polyglycidyl ether, and sorbitol polyglycidyl ether; novolac-type epoxy resins such as phenol novolac-type epoxy resin and cresol novolac-type epoxy resin; and bisphenol A type epoxy resins. The reaction products of epichlorohydrin and polyhydric alcohols and the novolac-type epoxy resins are preferable, and the reaction products of epichlorohydrin and polyhydric alcohols are more preferable. In a case where (E) the epoxide compound is a reaction product of polyhydric alcohol and epichlorohydrin, (E) the epoxide compound can be used in a state of being dissolved in water or dispersed in water by emulsification, whereby the adhesive composition for rubber-resin bonding containing such (E) epoxide compound is easier to manufacture than otherwise. Commercially available chemicals may be used as the foregoing sorbitol polyglycidyl ether, polyglycerol polyglycidyl ether, and novolac-type epoxy resins.

(E) The epoxide compound can be used in a state of being dissolved in water or dispersed in water by emulsification. For example, (E) the epoxide compound may be directly dissolved in water. Alternatively, a solution optionally obtained by dissolving (E) the epoxide compound in a small amount of solvent may be emulsified in water by using a known emulsifier (for example, sodium alkylbenzenesulfonate, dioctylsulfosuccinate sodium salt, nonylphenol ethylene oxide adduct, etc.) to yield an emulsion.

A content (solid content) of (E) the epoxide compound is not particularly limited, but is preferably 0.1 mass% or more, more preferably 0.4 mass% or more, and particularly preferably 1.0 mass%, and is preferably 40 mass% or less, and more preferably 30 mass% or less. When the content is 0.1 mass% or more, the adhesion between the resin and the coating rubber composition is further improved. When the content is 40 mass% or less, it is possible to secure at least a certain amount, relative to (E) the epoxide compound, of other components such as the rubber latex contained in the adhesive composition, whereby the adhesion between the resin and the adherend rubber is further improved.

### <Method for manufacturing adhesive composition for rubber-resin bonding>

The adhesive composition for rubber-resin bonding according to the present disclosure characteristically contains: (A) a synthetic rubber latex having an unsaturated diene; (B) a water-soluble carbodiimide; and (C) a thermally crosslinkable compound, and preferably contains, as (C) the thermally crosslinkable compound, (D) an aqueous compound having a (thermo-dissociably blocked) isocyanate group or (E) an epoxide compound. In manufacturing the adhesive composition, (A) the synthetic rubber latex having an unsaturated diene, (B) the water-soluble carbodiimide, and (C) the thermally crosslinkable compound [preferably (D) the aqueous compound having a (thermo-dissociably blocked) isocyanate group or (E) the epoxide compound] may be mixed in any order.

In this regard, when (E) the epoxide compound is mixed with water, the epoxy group reacts with water and tends to gradually lose its function or activity as a crosslinking agent. Therefore, after mixing (E) the epoxide compound with water, it is preferable to apply the adhesive composition to the resin for the coating treatment thereof as soon as possible. Specifically, after mixing (E) the epoxide compound with water, the adhesive composition is to be applied to the resin for the coating treatment thereof preferably within two days, and more preferably within one day.

The adhesive composition according to the present disclosure can be produced by, without being limited thereto: dissolving (B) the water-soluble carbodiimide in water; mixing (B) the water-soluble carbodiimide thus dissolved in water with (A) the synthetic rubber latex having an unsaturated diene and cooling the mixture; and then blending the mixture with (D) the aqueous compound having a (thermo-dissociably blocked) isocyanate group or (E) the epoxide compound. Preferably, the adhesive composition according to the present disclosure can be produced by: dissolving (B) the water-soluble carbodiimide in water; mixing (B) the water-soluble carbodiimide thus dissolved in water with (A) the synthetic rubber latex having an unsaturated diene or (E) the epoxide compound; and then blending the mixture with (D) the aqueous compound having a (thermo-dissociably blocked) isocyanate group.

In the adhesive composition according to the present disclosure, the mixing mass ratio [(A):(B)] (in terms of solid content) of (A) the synthetic rubber latex having an unsaturated diene and (B) the water-soluble carbodiimide is not particularly limited, but is preferably in the range of 100:0.1 to 100:25, and more preferably in the range of 100:0.2 to 100:5 (inclusive of the (B) content values of 0.1 and 25; 0.2 and 5 in the aforementioned ratios (A):(B)).
When the mixing mass ratio is 100: ≥ 0.1 (i.e., when the ratio value is 1000 or less), (B) the water-soluble carbodiimide can be crosslinked around (A) the synthetic rubber latex having an unsaturated diene.
When the mixing mass ratio is 100: ≤ 25 (i.e. when the ratio value is 4 or more), too much formation of crosslinked structures by (B) the water-soluble carbodiimide around (A) the synthetic rubber latex having an unsaturated diene is prevented and thus the adhesive composition layer, coating the resin surface, is prevented from being too hard, whereby the material degradation of the adhesive composition under repeated strain due to rotation during tire running can be reduced, so that favorable adhesiveness can be maintained.

In the adhesive composition according to the present disclosure, the mixing mass ratio of (A) the synthetic rubber latex having an unsaturated diene and (C) the thermally crosslinkable compound [preferably (D) the aqueous compound having a (thermo-dissociably blocked) isocyanate group or (E) the epoxide compound] is not particularly limited, but the mass ratio [(A):(C)] (in terms of solid content) of (A) the synthetic rubber latex having an unsaturated diene and (C) the thermally crosslinkable compound is preferably in the range of 100:5 to 100:300, more preferably in the range of 100:15 to 100:150, and even more preferably in the range of 100:20 to 100:80 (inclusive of the (C) content values of 5 and 300; 15 and 150; 20 and 80 in the aforementioned ratios (A):(C)).
When the mixing mass ratio is 100: ≥ 5 (i.e. when the ratio value is 20 or less), the ratio of (A) the synthetic rubber latex having an unsaturated diene in the adhesive composition is not excessively high, so that satisfactorily high fracture resistance of the adhesive layer formed by the adhesive composition can be maintained and a decrease in adhesiveness under strain can be prevented. When the mixing mass ratio is 100: ≤ 300 (i.e. when the ratio value is 1/3 or more), the ratio of (A) the synthetic rubber latex having an unsaturated diene in the adhesive composition is not too low. Accordingly, when the adhesive composition and the coating rubber composition to which the resin is adhered are covulcanized so that the adhesive composition adheres to the coating rubber composition, the coating rubber composition as the adherend and (A) the synthetic rubber latex having an unsaturated diene undergo favorable compatibilization, thereby resulting in satisfactorily high adhesiveness between the coating rubber composition as the adherend and the adhesive composition.

(A) the synthetic rubber latex having an unsaturated diene, (B) the water-soluble carbodiimide, and (C) the thermally crosslinkable compound are preferably aqueous. Water which causes relatively little pollution of the environment can be used as a solvent in this case.

### [Organic fiber cord-rubber composite]

An organic fiber cord-rubber composite according to the present disclosure uses an organic fiber cord coated with the adhesive composition for rubber-resin bonding according to the present disclosure. The organic fiber cord-rubber composite according to the present disclosure has the foregoing effects (1) and (2).
The organic fiber cord-rubber composite according to the present disclosure will be described in detail below, with reference to FIG. 1.

FIG. 1 is a schematic sectional view illustrating an example of the organic fiber cord-rubber composite according to the present disclosure. In an organic fiber cord-rubber composite 31 illustrated in FIG. 1, the outer surface, on the radially outer side, of the organic fiber cord 1 is coated with an adhesive layer 32 formed by an adhesive composition 2 for rubber-resin bonding according to the present disclosure. The organic fiber cord 1 adheres to a coating rubber composition 33 located on the radially outer side of the organic fiber cord 1 via the adhesive 32 formed by the adhesive composition 2, whereby the organic fiber cord-rubber composite 31 according to the present disclosure is formed.

The rubber reinforcing material using the adhesive composition for rubber-resin bonding according to the present disclosure may have any form of film, short fiber, non-woven fabric, etc., other than the foregoing organic fiber cord-rubber composite.

### <<Organic fiber cord in organic fiber cord-rubber composite>>

Regarding the organic fiber cord included in the organic fiber cord-rubber composite according to the present disclosure, the foregoing section <<Organic fiber cord>> should be referred to.

### <<Coating rubber composition in organic fiber cord-rubber composite>>

As the coating rubber composition included in the organic fiber cord-rubber composite according to the present disclosure, a rubber composition obtained by blending a rubber component with compounding agents commonly used in the rubber industry is preferable. Type of the rubber component is not particularly limited, and examples thereof include: natural rubber; conjugated diene-based synthetic rubbers such as polyisoprene rubber (IR), polybutadiene rubber (BR), styrene-butadiene copolymer rubber (SBR), acrylonitrile-butadiene rubber (NBR), chloroprene rubber (CR), and butyl rubber (IIR); ethylene-propylene copolymer rubber (EPM); ethylene-propylene-diene copolymer rubber (EPDM); and polysiloxane rubber. Of those examples, natural rubber and conjugated diene-based synthetic rubbers are preferable. These rubber components may be used singly or in combination of two or more.

### <<Method for manufacturing organic fiber cord-rubber composite>>

The organic fiber cord-rubber composite according to the present disclosure is manufactured by: coating an organic fiber cord with the adhesive composition for rubber-resin bonding according to the present disclosure to form an adhesive layer; and then covulcanizing (A) the synthetic rubber latex having an unsaturated diene in the adhesive composition for rubber-resin bonding and a rubber component in a coating rubber composition to which the organic fiber cord is to be adhered, so that the synthetic rubber latex adheres to the rubber component.

Non-limiting examples of the method for coating the organic fiber cord with the adhesive composition for rubber-resin bonding according to the present disclosure include a method of immersing the organic fiber cord in the adhesive composition for rubber-resin bonding, a method of applying the adhesive composition for rubber-resin bonding to the organic fiber cord with a brush, and a method of spraying the adhesive composition for rubber-resin bonding onto the organic fiber cord. Any appropriate method may be selected and used according to need.

When coating the organic fiber cord with the adhesive composition for rubber-resin bonding, it is preferable to dissolve the adhesive composition for rubber-resin bonding in any of various solvents to reduce its viscosity, from the viewpoint of facilitating coating. As the solvent for reducing the viscosity of the adhesive composition for rubber-resin bonding, a solvent consisting mainly of water is environmentally desirable.

The thickness of the adhesive layer formed by the adhesive composition for rubber-resin bonding is not particularly limited, but is preferably 50 µm or less, and more preferably 0.5 µm or more and 30 µm or less.
In a case where the coating of the adhesive composition formed by the adhesion treatment is too thick, adhesion durability in a tire rolling condition tends to deteriorate. Adhesion durability deteriorates in this case because, while the adhesive composition experiences relatively little deformation at the interface of the fiber material as an adherend since the highly rigid fiber material bears the stress caused by strain, the larger deformation is caused by strain as the distance from the interface increases. Besides, the adhesive composition containing a relatively large amount of thermoset condensate, as compared with the adherend rubber material, tends to experience a large magnitude of adhesion fatigue under repeated strain due to hardness and brittleness thereof. Accordingly, the average thickness of the adhesive composition layer is preferably 50 µm or less, and more preferably 0.5 µm or more and 30 µm or less.
The concentration of the adhesive composition for rubber-resin bonding with which the organic fiber cord is impregnated is not particularly limited, but is preferably 5.0 mass% or more and 25.0 mass% or less and more preferably 7.5 mass% or more and 20.0 mass% or less with respect to the mass of the organic fiber cord (in terms of solid content).

Preferably, the organic fiber cord coated with the adhesive composition for rubber-resin bonding is dried at a temperature of, for example, 100 °C or higher and 210 °C or lower, and then subjected to heat treatment at the temperature not lower than the glass transition temperature of the polymer chains of the organic fiber cord (typically, not lower than [the melting temperature of the polymer chains - 70 °C] and not higher than [the melting temperature of the polymer chains - 10 °C]).
When the heat treatment temperature is not lower than the glass transition temperature of the polymer chains of the organic fiber cord, the polymer chains of the organic fiber cord exhibit good molecular mobility, whereby the adhesion promoter [(C) the thermally crosslinkable compound] in the adhesive composition for rubber-resin bonding and the polymer chains of the organic fiber cord can interact in a satisfactory manner and thus satisfactory adhesion between the adhesive composition for rubber-resin bonding and the organic fiber cord can be obtained.
The organic fiber cord may be pretreated by using electron beam, microwave, corona discharge, plasma, or the like.

In the organic fiber cord-rubber composite according to the present disclosure, the resin material may be in any form such as film, cord, cable, filament, filament chip, cord fabric, and canvas. For reinforcement of rubber articles such as tire articles and conveyor belts, in particular, a cord obtained by twisting a plurality of filaments of the resin is suitably used. Preferably, in such a cord, the synthetic fiber has second twists and first twists, wherein the twist coefficient of the first twists is 1,300 to 2,500 and the twist coefficient of the second twists is 900 to 1,800. In the present disclosure, it is preferable that: the organic fiber cord is a tire cord of polyethylene terephthalate having a twist structure of 1670 dtex/2, a number of second twists of 40/10 cm, and a number of first twists of 40/10 cm; and the adhesive composition for rubber-resin bonding is adhered to the tire cord, to obtain the organic fiber cord-rubber composite.

Lastly, (A) the synthetic rubber latex having an unsaturated diene in the adhesive composition for rubber-resin bonding, with which composition the organic fiber cord has been coated, and a rubber component in a coating rubber composition which is the adherend of the organic fiber cord are covulcanized to cause adhesion between (the synthetic rubber latex and the rubber component and thus) the organic rubber cord and the coating rubber composition.

Examples of the vulcanizing agent used in the covulcanization of the rubber component in the coating rubber composition include sulfur, thiuram polysulfide compounds such as tetramethylthiuram disulfide and dipentamethylenethiuram tetrasulfide, and organic vulcanizing agents such as 4,4-dithiomorpholine, p-quinonedioxime, p,p'-dibenzoquinonedioxime, and cyclic sulfur imide. Of those examples, sulfur is preferable. The rubber component in the coating rubber composition may be appropriately blended with any of various compounding agents including fillers such as carbon black, silica, and aluminum hydroxide, vulcanization accelerators, antioxidants, and softeners commonly used in the rubber industry.

Regarding the adhesive composition for rubber-resin bonding according to the present disclosure, needless say, an adhesion effect thereof can be obtained by another method in which a vulcanizing agent contained in the synthetic resin material such as an organic fiber cord as an adherend and/or the coating rubber composition as another adherend migrates to the adhesive composition for rubber-resin bonding and achieves crosslinking of the adhesive composition for rubber-resin bonding.

### [Tire]

A tire according to the present disclosure uses the organic fiber cord-rubber composite according to the present disclosure. The tire according to the present disclosure has the foregoing effects (1) and (2).

In the tire according to the present disclosure, the organic fiber cord-rubber composite is applicable to, for example, a carcass, a belt, a belt reinforcement layer, or a belt periphery reinforcement layer such as a flipper.

The tire of the present disclosure may be obtained by either i) molding a green tire by using an unvulcanized rubber composition and then subjecting the green tire to vulcanization or ii) molding a green tire by using a semi-vulcanized rubber prepared by a preliminary vulcanization process and then subjecting the green tire to main vulcanization, depending on the type of the intended tire. It suffices to employ the organic fiber cord treated with the adhesive composition described above in at least a portion of the tire of the present disclosure. In other words, any appropriate conventionally known members may be used for other structural members of the tire, with no particular restrictions thereto. The tire of the present disclosure is preferably a pneumatic tire. Examples of gas with which the tire is to be inflated include inert gas such as nitrogen, argon, helium or the like, as well as ambient air and air of which oxygen partial pressure has been adjusted.

The adhesive composition for rubber-resin bonding and the organic fiber cord-rubber composite according to the present disclosure described above are applicable to all kinds of rubber articles such as conveyor belts, belts, hoses, and air springs, in addition to tires.

### EXAMPLES

The present disclosure will be described further in detail by Examples hereinafter. The present disclosure is not limited by any means to these Examples.

### <(A) Synthetic rubber latex having unsaturated diene>

In the following Comparative Examples and Examples, as (A) the synthetic rubber latex having an unsaturated diene, vinylpyridine-styrene-butadiene copolymer latex was prepared according to Comparative Example 1 in JP H09-078045 A in the following manner, and used.
A vinylpyridine-styrene-butadiene copolymer latex was obtained by:
charging and dissolving 130 parts by mass of deionized water and 4.0 parts by mass of potassium rosinate in a 5-liter autoclave purged with nitrogen;
further charging a monomer mixture composed of 15 parts by mass of vinylpyridine monomer, 15 parts by mass of styrene, and 70 parts by mass of butadiene, with 0.60 parts by mass of t-dodecylmercaptan, and emulsifying the reactants in the autoclave;
then raising the temperature to 50 °C and adding 0.5 parts by mass of potassium persulfate to initiate polymerization;
after the reaction rate of the monomer mixture reached 90 %, adding 0.1 part by mass of hydroquinone, to terminate the polymerization; and
removing unreacted monomers under reduced pressure, to obtain a vinylpyridine-styrene-butadiene copolymer latex having a solid concentration of 41 mass%.

### <(B) Water-soluble carbodiimide>

In the following examples, (B) the water-soluble carbodiimide was prepared, as an aqueous solution thereof with a solid concentration of 10 mass %, by mixing 5 g of 1-(3-dimethylaminopropyl)-3-ethylcarbodiimide hydrochloride (M.W.191.7, purity > 98 %, manufactured by Tokyo Chemical Industry Co., Ltd.) with 45 g of deionized water in a 100 ml flask until the hydrochloride completely dissolved. The aqueous solution was used as (B) the water-soluble carbodiimide for preparation of the adhesive composition.

### <(D) Aqueous compound having (thermo-dissociably blocked) isocyanate group>

In the following Comparative Examples and Examples, as (D) the aqueous compound having a (thermo-dissociably blocked) isocyanate group, product name "ELASTRON BN77" [an aqueous urethane compound having a (thermo-dissociably blocked) isocyanate group, temperature at which the blocking agent is thermally dissociated: approximately 160 °C, pH: 8.0, solid concentration: 31 mass%] manufactured by DKS Co. Ltd. was used as it was.

### <(E) Epoxide compound>

In the following Comparative Examples and Examples, (E) the epoxide compound was prepared, as an aqueous solution thereof having a solid concentration of 10 mass%, by diluting, with deionized water, product name "DENACOL EX-614B" which is sorbitol polyglycidyl ether (molecular weight: 949, epoxy equivalent: 173, solid concentration: 100 mass%) manufactured by Nagase ChemteX Corporation. The aqueous solution was used as (E) the epoxide compound in the preparation of the adhesive composition.

### <<Preparation of latex adhesive composition (Comparative Example 1)>>

A latex adhesive composition of Comparative Example 1 was prepared by: mixing (A) the synthetic rubber latex having an unsaturated diene and water, with adjusting the amounts thereof so that the solid concentration would be 18 mass %; and then thoroughly stirring the mixture.

### <<Preparation of latex-aqueous urethane adhesive composition (Comparative Example 2)>>

A latex-aqueous urethane adhesive composition of Comparative Example 2 was prepared by: mixing (A) the synthetic rubber latex having an unsaturated diene and (D) the aqueous compound having a (thermo-dissociably blocked) isocyanate group according to the blend formulation shown in Table 2, with controllably adding water thereto so that the solid concentration of the adhesive composition would be 18 mass %; and then thoroughly stirring the mixture.

### <<Preparation of latex-epoxide compound adhesive composition (Comparative Example 3)>>

A latex-epoxide adhesive composition of Comparative Example 3 was prepared by: mixing (A) the synthetic rubber latex having an unsaturated diene and (E) the epoxide compound according to the blend formulation shown in Table 2, with controllably adding water thereto so that the solid concentration of the adhesive composition would be 18 mass %; and then thoroughly stirring the mixture.

### <<Preparation of adhesive compositions (Examples 1 and 2) according to embodiments of the present disclosure>>

Each of the adhesive compositions of Examples 1 and 2 according to embodiments of the present disclosure was prepared by: blending (A) the synthetic rubber latex having an unsaturated diene, (B) the water-soluble carbodiimide, and (D) the aqueous compound having a (thermo-dissociably blocked) isocyanate group (Example 1) or (E) the epoxide compound (Example 2) in this order according to the formulation shown in Table 2, with controllably adding water thereto so that the solid concentration of the adhesive composition would be 18 mass %; and then thoroughly stirring the mixture.

### <Coating of tire cord with each adhesive composition>

As an organic fiber cord, a tire cord of polyethylene terephthalate having a twist structure of 1670 dtex/2, a number of second twists of 40/10 cm, and a number of first twists of 40/10 cm was used.

A tire cord sample was prepared on this basis for each of Comparative Examples 1 to 3 and Examples 1 and 2 by: immersing the aforementioned tire cord in the corresponding adhesive composition such that the concentration of the adhesive composition with which the tire cord was impregnated would be 3.8 mass% with respect to the mass of the organic fiber cord; and subjecting the tire cord thus immersed to drying (150 °C, 60 sec) and adhesion heating (240 °C, 0.8 kg/cord, 60 sec), thereby obtaining a tire cord sample coated with the corresponding adhesive composition.

### <Formation of tire cord-rubber composite>

Each of the tire cord samples coated with the adhesive compositions of Comparative Examples 1 to 3 and Examples 1 to 2, respectively, was embedded in an unvulcanized rubber composition, and the tire cord sample and the unvulcanized rubber composition were subjected to covulcanization at 160 °C for 20 minutes, whereby a tire cord -rubber composite sample was obtained. As the unvulcanized rubber composition for coating, a rubber composition containing natural rubber, styrene-butadiene rubber, carbon black, vulcanization chemicals, etc. was used.

### <Evaluation of adhesiveness of adhesive composition>

The adhesiveness of each of the adhesive compositions of Comparative Examples 1 to 3 and Examples 1 to 2 was evaluated as follows.

### <<Evaluation of adhesive force>>

Adhesive force was determined for each of the respective tire cord-rubber composite samples obtained by using the adhesive compositions of Comparative Examples 1 to 3 and Examples 1 to 2 by: stretching the tire cord-rubber composite sample at a speed of 300 mm/min, thereby peeling off the tire cord from the tire cord-rubber composite, to record the force required for peeling; and calculating on this basis the peel resistance per one tire cord, which is regarded as the adhesive force (N/cord).

### <<Evaluation of adhesion state of coating rubber>>

The adhesion state was evaluated for each tire cord thus peeled off from the tire cord-rubber composite, by visually observing how the coating rubber was adhered to the tire cord and then grading the attaching state according to the criteria shown in Table 1.

**[Table 1]**

| Grade representing state in which rubber was attached to cord | Ratio of area where coating rubber remained without coming off, with respec to entire area of tire cord (organic fiber cord) | State of cord filaments |
|---|---|---|
| A+ | - | Filaments broken |
| A | 80% or more and 100% or less | Filaments not broken |
| B | 60% or more and less than 80% | Filaments not broken |
| C | 40% or more and less than 60% | Filaments not broken |
| D | 20% or more and less than 40% | Filaments not broken |
| E | 0% or more and less than 20% | Filaments not broken |

### <Results of evaluation of adhesiveness of adhesive composition> The blend formulations of the adhesive compositions of Comparative Examples 1 to 3 and Examples 1 to 2 and the adhesiveness evaluation results associated therewith are shown in Table 2.

**[Table 2]**

| | Component | | Comparative Example 1 | Comparative Example 2 | Comparative Example 3 | Example 1 | Example 2 |
|---|---|---|---|---|---|---|---|
| Composition in solid content of adhesive composition (mass%) | (A) | Vinylpyridine latex *A1 | 100.0 | 63.0 | 75.0 | 62.0 | 74.0 |
| | (B) | Water-soluble carbodiimide *B1 | - | - | - | 1.00 | 1.00 |
| | (D) | Aqueous urethane compound *D1 | - | 37.0 | - | 37.0 | - |
| | (E) | Epoxide compound *E1 | - | - | 25.0 | - | 25.0 |
| Composition in solution state of adhesive composition (mass%) | (A) | Vinylpyridine latex *A1 | 43.90 | 27.66 | 32.93 | 27.22 | 32.49 |
| | (B) | Water-soluble carbodiimide *B1 | - | - | - | 1.80 | 1.80 |
| | (D) | Aqueous urethane compound *D1 | - | 21.49 | - | 21.49 | - |
| | (E) | Epoxide compound *E1 | - | - | 4500 | - | 45.00 |
| | Water | | 56.10 | 50.86 | 22.08 | 49.50 | 20.71 |
| Solid concentration of adhesive composition (mass%) | | | 18.0 | 18.0 | 18.0 | 18.0 | 18.0 |
| Adhesiveness evaluation results | Adhesive force (N/cord) | | 4.39 | 5.43 | 5.97 | 23.01 | 17.34 |
| | Adhesion state of rubber | | E | E | E | A | B |

### <Regarding components of adhesive composition>

A1: Vinylpyridine latex [vinylpyridine-styrene-butadiene copolymer latex synthesized by the foregoing method, solid concentration: 41 mass%]
B1: Water-soluble carbodiimide [1-(3 -dimethylaminopropyl)-3-ethylcarbodiimide hydrochloride, M.W.191.7, purity > 98 %, manufactured by Tokyo Chemical Industry Co., Ltd., diluted to be an aqueous solution (concentration: 10 mass %) for use]
D1: Aqueous urethane compound [product name "ELASTRON BN77" manufactured by DKS Co. Ltd., which is an aqueous urethane compound having a (thermo-dissociably blocked) isocyanate group, temperature at which the blocking agent is thermally dissociated: approximately 160 °C, pH: 8.0, solid concentration: 31 mass%]
E1: Epoxide compound [sorbitol polyglycidyl ether, product name "DENACOL EX-614B" manufactured by Nagase ChemteX Corporation, molecular weight: 949, epoxy equivalent: 173, diluted to be an aqueous solution (concentration: 10 mass %) for use]

As can be understood from Table 2, each adhesive composition containing (D) the aqueous compound having a (thermo-dissociably blocked) isocyanate group or (E) the epoxide compound in addition to (A) the synthetic rubber latex having an unsaturated diene and (B) the water-soluble carbodiimide exhibits good adhesiveness between the organic fiber cord (resin) and the coating rubber composition.

### INDUSTRIAL APPLICABILITY

It is thus possible according to the present disclosure to provide an adhesive composition for rubber-resin bonding that (1) has little environmental impact and (2) exhibits good adhesiveness between resin and a coating rubber composition.
It is also possible according to the present disclosure to provide an organic fiber cord-rubber composite using an organic fiber cord coated with the adhesive composition for rubber-resin bonding, and a tire using the organic fiber cord-rubber composite. The presently disclosed techniques can thus be used in the industrial field of manufacturing rubber articles such as tires.

### REFERENCE SIGNS LIST

- 100: organic fiber cord
- 2: adhesive composition for rubber-resin bonding
- 31: organic fiber cord-rubber composite
- 32: adhesive layer formed by adhesive composition for rubber-resin bonding
- 33: coating rubber composition

## Claims

1. An adhesive composition for rubber-resin bonding, comprising:
(A) a synthetic rubber latex having an unsaturated diene;
(B) a water-soluble carbodiimide; and
(C) a thermally crosslinkable compound.

2. The adhesive composition for rubber-resin bonding according to claim 1, wherein it is resorcin-free.

3. The adhesive composition for rubber-resin bonding according to claim 1 or 2, wherein (C) the thermally crosslinkable compound is (D) an aqueous compound having a (thermo-dissociably blocked) isocyanate group or (E) an epoxide compound.

4. The adhesive composition for rubber-resin bonding according to claim 3, wherein (D) the aqueous compound having a (thermo-dissociably blocked) isocyanate group is a water-dispersible (thermo-dissociably blocked) isocyanate compound that is an addition product of a polyisocyanate having an aromatic ring and a blocking agent having at least one active hydrogen group.

5. The adhesive composition for rubber-resin bonding according to claim 3, wherein (D) the aqueous compound having a (thermo-dissociably blocked) isocyanate group is an aqueous urethane compound having a (thermo-dissociably blocked) isocyanate group.

6. The adhesive composition for rubber-resin bonding according to claim 5, wherein the aqueous urethane compound having a (thermo-dissociably blocked) isocyanate group is a reaction product obtained by: mixing
(α) an organic polyisocyanate compound having three or more and five or less functional groups and having a number-average molecular weight of 2,000 or less,
(β) a compound having two or more and four or less active hydrogen groups and having a number-average molecular weight of 5,000 or less,
(γ) a thermally dissociable blocking agent, and
(δ) a compound having at least one active hydrogen group and at least one anionic, cationic, or nonionic hydrophilic group,
such that the mixing ratio of (α) is 40 mass% or more and 85 mass% or less, the mixing ratio of (β) is 5 mass% or more and 35 mass% or less, the mixing ratio of (γ) is 5 mass% or more and 35 mass% or less, and the mixing ratio of (δ) is 5 mass% or more and 35 mass% or less with respect to the total amount of (α), (β), (γ), and (δ); and
causing the (α), (β), (γ), and (δ) to react with each other,
wherein the composition ratio of the (thermo-dissociably blocked) isocyanate group in the reaction product is 0.5 mass% or more and 11 mass% or less when the molecular weight of an isocyanate group (-NCO) is 42.

7. The adhesive composition for rubber-resin bonding according to claim 5, wherein the aqueous urethane compound having a (thermo-dissociably blocked) isocyanate group is represented by following general formula (1): 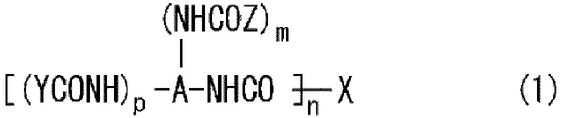 In the general formula (1),
"A" is a residual group after dissociation of an active hydrogen group from an organic polyisocyanate compound,
"X" is a residual group after dissociation of an active hydrogen group from a polyol compound having two or more and four or less hydroxyl groups and a number-average molecular weight of 5,000 or less,
"Y" is a residual group after dissociation of an active hydrogen group from a thermally dissociable blocking agent,
"Z" is a residual group after dissociation of an active hydrogen group from a compound having at least one active hydrogen group and at least one salt-forming group or hydrophilic polyether chain,
"n" is an integer of 2 or more and 4 or less, and
p + m is an integer of 2 or more and 4 or less (m ≥ 0.25).

8. The adhesive composition for rubber-resin bonding according to any one of claims 3 to 7, wherein (E) the epoxide compound has two or more epoxy groups in one molecule.

9. The adhesive composition for rubber-resin bonding according to any one of claims 3 to 8, wherein (E) the epoxide compound is a reaction product of a polyhydric alcohol and epichlorohydrin.

10. An organic fiber cord-rubber composite using an organic fiber cord coated with the adhesive composition for rubber-resin bonding according to any of claims 1 to 9.

11. A tire using the organic fiber cord-rubber composite according to claim 10.
